(19) Europäisches Patentamt
European Patent Office
Office européen des brevets

(11) **EP 3 961 909 B1**

(12) **EUROPEAN PATENT SPECIFICATION**

(45) Date of publication and mention
of the grant of the patent:
**10.01.2024   Bulletin 2024/02**

(21) Application number: **19925891.4**

(22) Date of filing: **26.04.2019**

(51) International Patent Classification (IPC):
*H02P 21/00* (2016.01)          *H02P 21/14* (2016.01)
*H02P 21/22* (2016.01)          *H02P 25/022* (2016.01)
*H02P 25/22* (2006.01)

(52) Cooperative Patent Classification (CPC):
**H02P 21/14; H02P 21/16; H02P 21/22;
H02P 25/03; H02P 25/22; H02P 29/64;
H02P 29/662;** H02P 2207/05

(86) International application number:
**PCT/JP2019/017841**

(87) International publication number:
**WO 2020/217438 (29.10.2020 Gazette 2020/44)**

(54) **MOTOR CONTROL DEVICE**

MOTORSTEUERUNGSVORRICHTUNG

DISPOSITIF DE COMMANDE DE MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.03.2022   Bulletin 2022/09**

(73) Proprietor: **MITSUBISHI ELECTRIC
CORPORATION
Chiyoda-ku
Tokyo 100-8310 (JP)**

(72) Inventors:
  • **KONDO Shota
    Tokyo 100-8310 (JP)**

  • **IEZAWA Masahiro
    Tokyo 100-8310 (JP)**

(74) Representative: **Hoffmann Eitle
Patent- und Rechtsanwälte PartmbB
Arabellastraße 30
81925 München (DE)**

(56) References cited:
WO-A1-2013/141059          WO-A1-2014/103586
JP-A- 2007 306 756          JP-A- 2017 112 694
JP-B2- S6 115 392           KR-B1- 101 664 680
US-A1- 2016 204 727         US-A1- 2017 170 766
US-A1- 2017 294 857

**Description**

TECHNICAL FIELD

The present disclosure relates to a motor control device.

BACKGROUND ART

In a motor having a field winding and a stator winding, it has been pointed out that torque response might be deteriorated due to response delay of current flowing through the field winding. Accordingly, it is proposed that a current correction value for compensating torque that is not obtained due to response delay of field current is calculated and a torque current command value is corrected by the current correction value (see, for example, Patent Document 1).

CITATION LIST

PATENT DOCUMENT

Patent Document 1: Japanese Patent No. 6115392

SUMMARY OF THE INVENTION

PROBLEMS TO BE SOLVED BY THE INVENTION

However, the technology described in Patent Document 1 requires a current command map prepared through measurement in advance, and the like. In addition, in a salient-type synchronous motor, an optimum current ratio needs to be set. In such cases, if motor characteristics are changed due to temperature change or the like, the current command map deviates from the actual condition or the optimum current ratio varies, thus causing a problem of reducing efficiency.
The patent KR101664680B and the published patent applications US2017294857A1 and US2017170766A1 each disclose a vector controlled wound rotor motor comprising a field current controller and a stator current controller.
The present disclosure has been made to solve the above problem, and an object of the present disclosure is to obtain a motor control device that can prevent reduction in efficiency even when motor characteristics are changed. The invention is defined in Claim 1.

SOLUTION TO THE PROBLEMS

A motor control device according to the present disclosure is a motor control device for controlling a motor having a first winding and a second winding whose response to a current command is slower than that of the first winding, the motor control device including: a parameter acquisition unit which regularly acquires motor state data indicating a state of the motor, and acquires a motor parameter corresponding to the motor state data; and a current command calculation unit which calculates current commands for the first winding and the second winding on the basis of a torque command for the motor and the motor parameter. The current command calculation unit includes a first calculation unit which calculates a first current command for the first winding, a second calculation unit which calculates a second current command for the second winding, and a response delay reproduction unit which reproduces, in the second current command, response delay of the second winding relative to the second current command. The first calculation unit calculates the first current command, using the second current command in which the response delay is reproduced.

EFFECT OF THE INVENTION

The motor control device according to the present disclosure can prevent reduction in efficiency even when motor characteristics are changed.

BRIEF DESCRIPTION OF THE DRAWINGS

[FIG. 1] FIG. 1 is a diagram showing the hardware configuration of a motor control device according to embodiment 1.

[FIG. 2] FIG. 2 is a block diagram showing the motor control device according to embodiment 1.

[FIG. 3] FIG. 3 is a block diagram showing a field winding current control unit according to embodiment 1.

[FIG. 4] FIG. 4 is a block diagram showing a first stator winding current control unit according to embodiment 1.

[FIG. 5] FIG. 5 is a block diagram showing a second stator winding current control unit according to embodiment 1.

[FIG. 6] FIG. 6 is a block diagram showing a drive current command generation unit according to embodiment 1.

[FIG. 7] FIG. 7 is a block diagram showing a current command calculation unit according to embodiment 1.

[FIG. 8A] FIG. 8A shows a control result in a conventional motor control device.

[FIG. 8B] FIG. 8B shows a control result in the motor control device according to embodiment 1.

[FIG. 9] FIG. 9 is a diagram showing the hardware configuration of a motor control device according to embodiment 2.

[FIG. 10] FIG. 10 is a block diagram showing the motor control device according to embodiment 2.

DESCRIPTION OF EMBODIMENTS

Embodiment 1

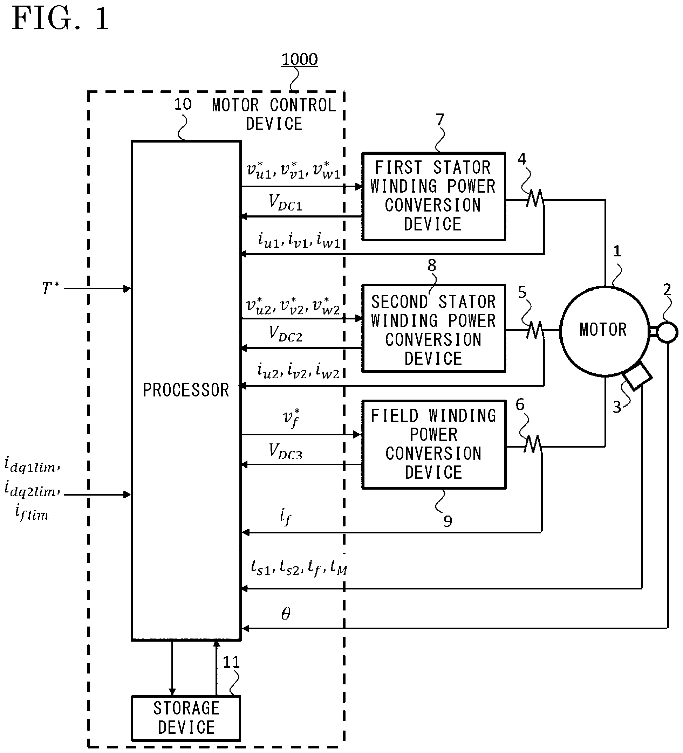

Hereinafter, embodiment 1 will be described with reference to FIG. 1 to FIG. 8B. FIG. 1 is a diagram showing the hardware configuration of a motor control device according to embodiment 1, and shows an entire system including a motor which is a control target. A motor control device 1000 is for performing drive control for a motor 1, and is connected to windings of the motor 1 via a first stator winding power conversion device 7, a second stator winding power conversion device 8, and a field winding power conversion device 9 each described later. In addition, the motor control device 1000 is connected to a position detector 2 and a temperature detector 3 provided to the motor 1. Further, the motor control device 1000 is connected to current detectors 4, 5, 6 which are respectively connected in series between the motor 1, and the first stator winding power conversion device 7, the second stator winding power conversion device 8, and the field winding power conversion device 9.

The motor 1 is a double three-phase winding motor including a rotor having a permanent magnet and a field winding wound around the permanent magnet, and a stator having two pairs of three-phase stator windings. Hereinafter, the two pairs of three-phase windings of the stator of the motor 1 are referred to as "first stator windings" and "second stator windings". The first stator windings and the second stator windings correspond to a "first winding", and the field winding corresponds to a "second winding". The above-described parts of the motor are not shown in the drawings.

The position detector 2 is provided to a rotary shaft of the motor 1 and detects an angle θ of the rotor. The position detector 2 transmits the detected angle θ to the motor control device 1000. Instead of the position detector 2, a position estimator for estimating the angle θ of the rotor may be provided and an estimated value of the angle θ may be transmitted to the motor control device 1000.

The temperature detector 3 detects at least one of a temperature ts1 of the first stator windings, a temperature ts2 of the second stator windings, a temperature tf of the field winding, and a temperature tM of the permanent magnet. The temperature detector 3 transmits the detected temperatures ts1, ts2, tf, tM to the motor control device 1000. Instead of the temperature detector 3, a temperature estimator may be provided and estimated values of ts1, ts2, tf, tM may be transmitted to the motor control device 1000.

The current detector 4 detects three-phase currents flowing through the first stator windings, and transmits the respective current values as first stator winding currents iu1, iv1, iw1 to the motor control device 1000. The current detector 5 detects three-phase currents flowing through the second stator windings, and transmits the respective current values as second stator winding currents iu2, iv2, iw2 to the motor control device 1000. The current detector 6 detects current flowing through the field winding, and transmits the current value thereof as field winding current if to the motor control device 1000. Instead of the current detectors 4, 5, 6, a current estimator may be provided and estimated values of iu1, iv1, iw1, iu2, iv2, iw2, if may be transmitted to the motor control device 1000.

The first stator winding power conversion device 7 receives three-phase voltage commands vu1*, vv1*, vw1* for the first stator windings from the motor control device 1000, and generates voltages corresponding to the respective voltage commands. In addition, the first stator winding power conversion device 7 detects DC link voltage used in power conversion for the first stator windings, and transmits the voltage value thereof as DC link voltage VDC1 to the motor control device 1000.

The second stator winding power conversion device 8 receives three-phase voltage commands vu2*, vv2*, vw2* for the second stator windings from the motor control device 1000, and generates voltages corresponding to the respective voltage commands. In addition, the second stator winding power conversion device 8 detects DC link voltage used in power conversion for the second stator windings, and transmits the voltage value thereof as DC link voltage VDC2 to the motor control device 1000.

The field winding power conversion device 9 receives a field winding voltage command vf* which is a voltage command for the field winding, from the motor control device 1000, and generates voltage corresponding to the field winding voltage command vf*. In addition, the field winding power conversion device 9 detects DC link voltage used in power conversion for the field winding, and transmits the voltage value thereof as DC link voltage VDC3 to the motor control device 1000.

The motor control device 1000 includes a processor 10 and a storage device 11. The storage device 11 includes a volatile storage device (not shown) such as a random access memory, and an auxiliary storage device (not shown) such as a flash memory. As the auxiliary storage device, an auxiliary storage device of a hard disk or the like may be provided instead of the volatile storage device described above. The auxiliary storage device of the storage device 11 stores a program to be executed by the processor 10.

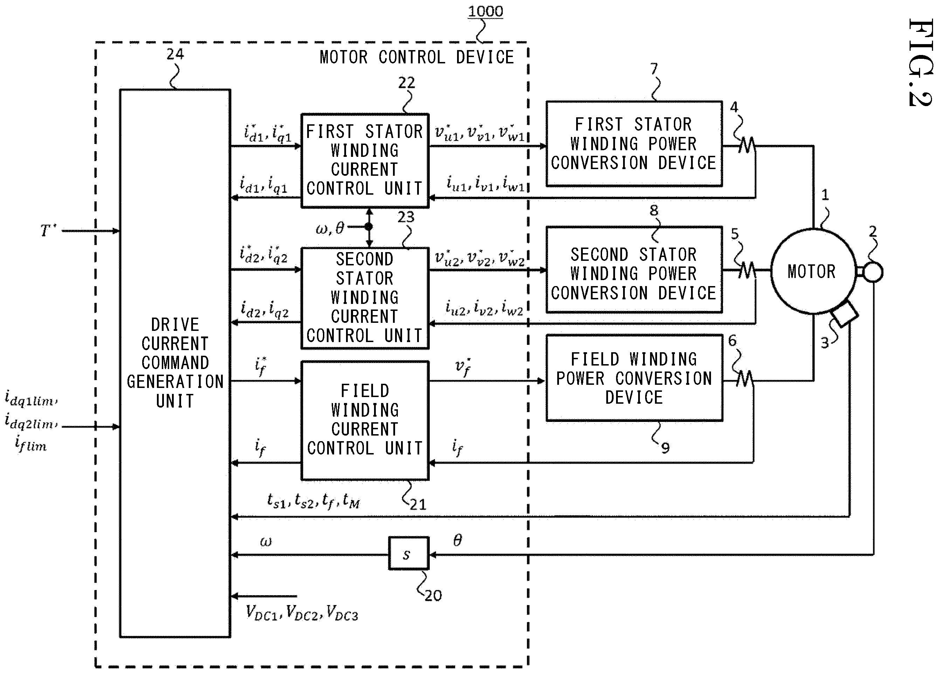

The processor 10 is, for example, a central processing unit (CPU), and executes a program read from the storage device 11, to implement various function units shown in FIG. 2. When the processor 10 reads the program from the storage device 11, the processor 10 reads the program stored in the auxiliary storage device via the volatile storage device. Through execution of the program by the processor 10, current commands, data, and the like are generated. The processor 10 may output the data to the volatile storage device of the storage device 11, or may store the data into the auxiliary storage device via the volatile storage device.

The processor 10 transmits the generated current commands to the first stator winding power conversion device 7, the second stator winding power conversion device 8, and the field winding power conversion device 9 via an interface (not shown) with the outside. The processor 10 receives the angle θ from the position detector 2. The processor 10 receives the temperatures ts1, ts2, tf, tM from the temperature detector 3. The processor 10 receives the first stator winding currents iu1, iv1, iw1 from the current detector 4, the second stator winding currents iu2, iv2, iw2 from the current detector 5, and the field winding current if from the current detector 6. The processor 10 receives the DC link voltages VDC1, VDC2, VDC3 from the first stator winding power conversion device 7, the second stator winding power conversion device 8, and the field winding power conversion device 9, respectively. The processor 10 receives a torque command T*, a current limit idq1lim which is a current upper limit value for the first stator windings, a current limit idq2lim which is a current upper limit value for the second stator windings, and a current limit iflim which is a current upper limit value for the field winding, from a high-order control device or through a user's input.

FIG. 2 is a block diagram showing the motor control device according to embodiment 1. The motor control device 1000 includes: a drive current command generation unit 24 which generates current commands for controlling currents flowing through the respective windings of the motor 1, to drive the motor 1; a first stator winding current control unit 22 which converts first stator winding current commands id1*, iq1* for controlling currents flowing through the first stator windings, to the first stator winding voltage commands vu1*, vv1*, vw1* which are three-phase voltage commands; a second stator winding current control unit 23 which converts second stator winding current commands id2*, iq2* for controlling currents flowing through the second stator windings, to the second stator winding voltage commands vu2*, vv2*, vw2* which are three-phase voltage commands; and a field winding current control unit 21 which converts a field winding current command if* for controlling current flowing through the field winding, to the field winding voltage command vf*. Further, the motor control device 1000 includes a differentiator 20 which receives the angle θ of the rotor of the motor 1 from the position detector 2 of the motor 1 and calculates an angular velocity ω of the rotor.

The differentiator 20 calculates the angular velocity ω by differentiating the angle θ with respect to time. The differentiator 20 outputs the calculated angular velocity ω to the drive current command generation unit 24.

The field winding current control unit 21 receives the field winding current command if* from the drive current command generation unit 24 and the field winding current if from the current detector 6, and calculates the field winding voltage command vf* so that the field winding current if follows the field winding current command if*. The field winding current control unit 21 transmits the calculated field winding voltage command vf* to the field winding power conversion device 9. In addition, the field winding current control unit 21 transmits the field winding current if received from the current detector 6, to the drive current command generation unit 24.

The first stator winding current control unit 22 receives the first stator winding current commands id1*, iq1* from the drive current command generation unit 24 and the first stator winding currents iu1, iv1, iw1 from the current detector 4, and calculates the first stator winding voltage commands vu1*, vv1*, vw1* so that the first stator winding currents iu1, iv1, iw1 follow the first stator winding current commands id1*, iq1*. Here, the first stator winding current commands id1*, iq1* generated by the drive current command generation unit 24 are current commands represented in an orthogonal two-phase coordinate system, and meanwhile, the first stator winding voltage commands vu1*, vv1*, vw1* are voltage commands in a three-phase AC coordinate system. Therefore, the first stator winding current control unit 22 performs coordinate conversion from the orthogonal two-phase coordinate system to the three-phase AC coordinate system, using the angle Θ. The first stator winding current control unit 22 transmits the calculated first stator winding voltage commands vu1*, vv1*, vw1* to the first stator winding power conversion device 7. In addition, the first stator winding current control unit 22 performs coordinate conversion of the first stator winding currents iu1, iv1, iw1 received from the current detector 4, to the orthogonal two-phase coordinate system, using the angle θ, and transmits the obtained result as first stator winding d-axis current id1 and first stator winding q-axis current iq1 to the drive current command generation unit 24.

The second stator winding current control unit 23 receives the second stator winding current commands id2*, iq2* from the drive current command generation unit 24 and the second stator winding currents iu2, iv2, iw2 from the current detector 5, and calculates the second stator winding voltage commands vu2*, vv2*, vw2* so that the second stator winding currents iu2, iv2, iw2 follow the second stator winding current commands id2*, iq2*. As in the first stator winding current control unit 22, the second stator winding current control unit 23 performs coordinate conversion from the orthogonal two-phase coordinate system to the three-phase AC coordinate system, using the angle θ. The second stator winding current control unit 23 transmits the calculated second stator winding voltage commands vu2*, vv2*, vw2* to the second stator winding power conversion device 8. In addition, the second stator winding current control unit 23 performs coordinate conversion of the second stator winding currents iu2, iv2, iw2 received from the current detector 5, to the orthogonal two-phase coordinate system, using the angle θ, and transmits the obtained result as second stator winding d-axis current id2 and second stator winding q-axis current iq2 to the drive current command generation unit 24.

The drive current command generation unit 24 is for driving the motor 1 so as to achieve torque indicated by the torque command T*, and calculates the first stator winding current commands id1*, iq1* and the second stator winding current commands id2*, iq2* in the orthogonal two-phase coordinate system, and the field winding current command if* for a single phase. The drive current command generation unit 24 calculates the current commands described above, on the basis of the torque command T*, the current values of currents flowing through the respective windings and the upper limit values thereof, the voltage values of the DC link voltages used in power conversion, the temperatures of the parts of the motor 1, and the angular velocity ω of the rotor of the motor 1. Here, the "current values of currents flowing through the respective windings" are the first stator winding d-axis current id1, the first stator winding q-axis current iq1, the second stator winding d-axis current id2, the second stator winding q-axis current iq2, and the field winding current if, and the "limit values" are the current limit idq1lim, the current limit idq2lim, and the current limit iflim. The "voltage values of the DC link voltages" are the DC link voltages VDC1, VDC2, VDC3. The "temperatures of the parts of the motor 1" are the temperature ts1 of the first stator winding, the temperature ts2 of the second stator winding, the temperature tf of the field winding, and the temperature tM of the permanent magnet. The first stator winding current commands id1*, iq1* and the second stator winding current commands id2*, iq2* correspond to a "first current command", and the field winding current command if* corresponds to a "second current command".

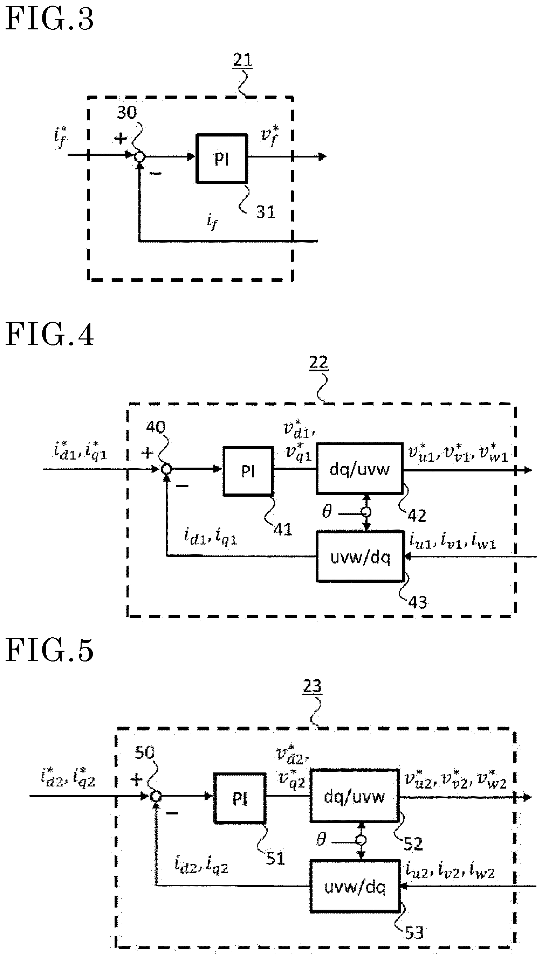

Next, the detailed configuration of the field winding current control unit 21 will be described with reference to FIG. 3. The field winding current control unit 21 includes an adder/subtractor 30 and a PI control unit 31, as shown in FIG. 3. First, the field winding current control unit 21 takes a difference between the field winding current command if* inputted from the drive current command generation unit 24 and the field winding current if received from the current detector 6, by the adder/subtractor 30, to obtain a field winding current deviation (= if* - if). Next, the field winding current control unit 21 performs proportional-integral (PI) control by the PI control unit 31 on the basis of the field winding current deviation, to generate the field winding voltage command vf*. Calculation in the PI control is performed as shown by the following Expression (1), for example. In Expression (1), Kpf and Kif are a proportional gain and an integral gain in current control for the field winding. In addition, s is a differential operator of Laplace transform. The same applies to the other expressions below.

$$vf^* = (Kpf + Kif/s) \times (if^* - if) \qquad \cdots \ (1)$$

Although not shown, decoupling processing may be performed after the field winding voltage command vf* is generated.

Next, the detailed configuration of the first stator winding current control unit 22 will be described with reference to FIG. 4. The first stator winding current control unit 22 includes an adder/subtractor 40, a PI control unit 41, a two-phase/three-phase coordinate converter 42, and a three-phase/two-phase coordinate converter 43, as shown in FIG. 4. First, the first stator winding current control unit 22 performs coordinate conversion of the three-phase first stator winding currents iu1, iv1, iw1 received from the current detector 4, to the first stator winding d-axis current id1 and the first stator winding q-axis current iq1, using the angle θ, by the three-phase/two-phase coordinate converter 43. For the coordinate conversion by the three-phase/two-phase coordinate converter 43, a known coordinate conversion method may be used.

Next, the first stator winding current control unit 22 takes a difference between the first stator winding current command id1* inputted from the drive current command generation unit 24 and the first stator winding d-axis current id1, and a difference between the first stator winding current command iq1* inputted from the drive current command generation unit 24 and the first stator winding q-axis current iq1, by the adder/subtractor 40, to obtain a first stator winding d-axis current deviation (= id1* - id1) and a first stator winding q-axis current deviation (= iq1* - iq1). Next, the first stator winding current control unit 22 performs PI control by the PI control unit 41 on the basis of the first stator winding d-axis current deviation and the first stator winding q-axis current deviation, to generate the first stator winding d-axis voltage command vd1* and the first stator winding q-axis voltage command vq1*. Calculation in the PI control is performed as shown by the following Expression (2) and Expression (3), for example. In Expression (2) and Expression (3), Kpd1 and Kid1, and Kpq1 and Kiq1, are proportional gains and integral gains in current control for the first stator windings, respectively.

$$vd1* = (Kpd1 + Kid1/s) \times (id1* - id1) \qquad \dots (2)$$

$$vq1* = (Kpq1 + Kiq1/s) \times (iq1* - iq1) \qquad \dots (3)$$

Although not shown, decoupling processing may be performed for canceling interfering components due to a speed electromotive force occurring on the basis of the angular velocity ω of the rotor of the motor 1, after the first stator winding d-axis voltage command vd1* and the first stator winding q-axis voltage command vq1* are generated.

Next, the first stator winding current control unit 22 performs coordinate conversion of the first stator winding d-axis voltage command vd1* and the first stator winding q-axis voltage command vq1* to the three-phase first stator winding voltage commands vu1*, vv1*, vw1*, using the angle Θ, by the two-phase/three-phase coordinate converter 42. For the coordinate conversion by the two-phase/three-phase coordinate converter 42, a known coordinate conversion method may be used.

Next, the detailed configuration of the second stator winding current control unit 23 will be described with reference to FIG. 5. The second stator winding current control unit 23 includes an adder/subtractor 50, a PI control unit 51, a two-phase/three-phase coordinate converter 52, and a three-phase/two-phase coordinate converter 53, as shown in FIG. 5. First, the second stator winding current control unit 23 performs coordinate conversion of the three-phase second stator winding currents iu2, iv2, iw2 received from the current detector 5, to the second stator winding d-axis current id2 and the second stator winding q-axis current iq2, using the angle θ, by the three-phase/two-phase coordinate converter 53. For the coordinate conversion by the three-phase/two-phase coordinate converter 5, a known coordinate conversion method may be used.

Next, the second stator winding current control unit 23 takes a difference between the second stator winding current command id2* inputted from the drive current command generation unit 24 and the second stator winding d-axis current id2, and a difference between the second stator winding current command iq2* inputted from the drive current command generation unit 24 and the second stator winding q-axis current iq2, by the adder/subtractor 50, to obtain a second stator winding d-axis current deviation (= id2* - id2) and a second stator winding q-axis current deviation (= iq2* - iq2). Next, the second stator winding current control unit 23 performs PI control by the PI control unit 51 on the basis of the second stator winding d-axis current deviation and the second stator winding q-axis current deviation, to generate the second stator winding d-axis voltage command vd2* and the second stator winding q-axis voltage command vq2*. Calculation in the PI control is performed as shown by the following Expression (4) and Expression (5), for example. In Expression (4) and Expression (5), Kpd2 and Kid2, and Kpq2 and Kiq2, are proportional gains and integral gains in the current control for the second stator windings, respectively.

$$vd2* = (Kpd2 + Kid2/s) \times (id2* - id2) \qquad \dots (4)$$

$$vq2* = (Kpq2 + Kiq2/s) \times (iq2* - iq2) \qquad \dots (5)$$

Although not shown, decoupling processing may be performed for canceling interfering components due to a speed electromotive force occurring on the basis of the angular velocity ω of the rotor of the motor 1, after the second stator winding d-axis voltage command vd2* and the second stator winding q-axis voltage command vq2* are generated.

Next, the second stator winding current control unit 23 performs coordinate conversion of the second stator winding d-axis voltage command vd2* and the second stator winding q-axis voltage command vq2* to the three-phase second stator winding voltage commands vu2*, vv2*, vw2*, using the angle θ, by the two-phase/three-phase coordinate converter 52. For the coordinate conversion by the two-phase/three-phase coordinate converter 52, a known coordinate conversion method may be used.

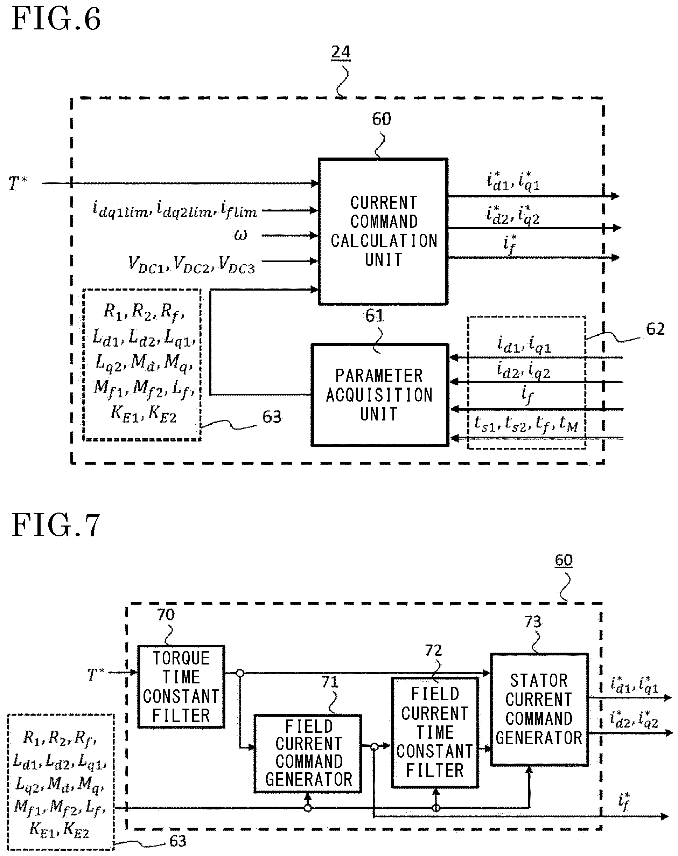

Next, the detailed configuration of the drive current command generation unit 24 will be described with reference to FIG. 6. The drive current command generation unit 24 includes a current command calculation unit 60 and a parameter acquisition unit 61, as shown in FIG. 6. The parameter acquisition unit 61 receives data (hereinafter, referred to as "motor state data 62") such as the first stator winding d-axis current id1 and the first stator winding q-axis current iq1 outputted from the first stator winding current control unit 22, the second stator winding d-axis current id2 and the second stator winding q-axis current iq2 outputted from the second stator winding current control unit 23, the field winding current if outputted from the field winding current control unit 21, and the temperatures of the parts of the motor 1 transmitted from the temperature detector 3, i.e., the temperature ts1 of the first stator windings, the temperature ts2 of the second stator windings, the temperature tf of the field winding, and the temperature tM of the permanent magnet. The parameter acquisition unit 61 acquires motor parameters 63 on the basis of the received motor state data 62. Here, the "motor parameters" are parameters representing the motor characteristics of the motor 1, and include the resistance values of resistances of the windings, the inductance values of the windings, the mutual inductance values between the windings, and the magnetic flux values of permanent magnet magnetic fluxes interlinking with the stator windings. Here, the "resistance values of resistances of the windings" are a first stator winding resistance R1, a second stator winding resistance R2, and a field winding resistance Rf. The "inductance values of the windings" are a first stator winding d-axis inductance Ld1, a second stator winding d-axis inductance Ld2, a first stator winding q-axis inductance Lq1, a second stator winding q-axis inductance Lq2, and a field winding inductance Lf. The "mutual inductance values between the windings" are a d-axis mutual inductance Md between the first stator windings and the second stator windings, a q-axis mutual inductance Mq between the first stator windings and the second stator windings, a mutual inductance Mf1 between the first stator windings and the field winding, and a mutual inductance Mf2 between the second stator windings and the field winding. The "magnetic flux values of permanent magnet magnetic fluxes interlinking with the stator windings" are a magnetic flux KE1 of a permanent magnet magnetic flux interlinking with the first stator windings, and a magnetic flux KE2 of a permanent magnet magnetic flux interlinking with the second stator windings. The parameter acquisition unit 61 outputs the acquired motor parameters 63 to the current command calculation unit 60.

The parameter acquisition unit 61 only has to have a configuration for acquiring the motor parameters 63 corresponding to the motor state data 62, and may be formed by a lookup table (hereinafter, referred to as "LUT") storing data of the motor parameters 63 in association with the motor state data 62, for example. Alternatively, the parameter acquisition unit 61 may be formed by a calculation unit that performs calculation of a function defined with the motor state data 62 as an input and each data of the motor parameters 63 as an output. As the motor state data 62 described above, actual measured values may be used or instead, estimated values based on a predetermined model may be used. In a case of using estimated values as the motor state data 62, it is possible to eliminate the influence of harmonic disturbance which might be included in actual measured values such as actual currents, and the like.

The current command calculation unit 60 calculates the first stator winding current commands id1*, iq1*, the second stator winding current commands id2*, iq2*, and the field winding current command if*, with a predetermined calculation cycle, on the basis of the torque command T*, the current limits idq1lim, idq2lim, iflim for the first stator winding, the second stator winding, and the field winding, the angular velocity ω of the rotor, the DC link voltages VDC1, VDC2, VDC3, and the motor parameters 63 outputted from the parameter acquisition unit 61.

The parameter acquisition unit 61 regularly receives the motor state data 62 to update the motor parameters 63, and outputs the updated motor parameters 63 to the current command calculation unit 60. The update cycle for the motor parameter 63 by the parameter acquisition unit 61 is shorter than or equal to the calculation cycle of the current command calculation unit 60. Thus, the current commands calculated by the current command calculation unit 60 reflect change in the motor parameters 63 in real time.

Next, the detailed configuration of the current command calculation unit 60 will be described with reference to FIG. 7. As shown in FIG. 7, the current command calculation unit 60 includes a torque time constant filter 70, a field current command generator 71, i.e., a second calculation unit, a field current time constant filter 72, i.e., a response delay reproduction unit, and a stator current command generator 73, i.e., a first calculation unit. The torque time constant filter 70 receives the torque command T*, adjusts the received torque command T* in accordance with a predetermined criterion, and outputs the adjusted torque command T* to the field current command generator 71 and the stator current command generator 73. The torque time constant filter 70 is formed by a filter, a state estimator, a LUT, or the like.

The torque time constant filter 70 performs such adjustment that, when the torque command T* sharply changes and the change amount or the change rate thereof exceeds a predetermined threshold, the torque time constant filter 70 performs filtering on the change amount or the change rate of the torque command T*, to eliminate the change beyond the threshold, for example.

The field current command generator 71 calculates the current command for each winding on the basis of the torque command T* adjusted by the torque time constant filter 70 and the motor parameters 63. The field current command generator 71 uses the method of Lagrange multipliers for calculating the current command for each winding so as to achieve maximum efficiency. The field current command generator 71 determines the field winding current command if* so as to minimize an evaluation function represented by the following Expression (7) under a constraint condition represented by the following Expression (6).

[Mathematical 1]

$$\frac{T}{P_n} = \frac{T_1 + T_2}{P_n}$$
$$= \left(M_{f_1} i_{q_1} + M_{f_2} i_{q_2}\right) i_f + \left(L_{d_1} - L_{q_1}\right) i_{d_1} i_{q_1}$$
$$+ \left(L_{d_2} - L_{q_2}\right) i_{d_2} i_{q_2} + \left(M_d - M_q\right)\left(i_{d_2} i_{q_1} + i_{d_1} i_{q_2}\right) \quad \cdots \cdots (6)$$
$$+ K_{E_1} i_{q_1} + K_{E_2} i_{q_2}$$

[Mathematical 2]

$$P_w = R_1\left(i_{d_1}^2 + i_{q_1}^2\right) + R_2\left(i_{d_2}^2 + i_{q_2}^2\right) + R_f i_f^2 \quad \cdots \cdots (7)$$

Expression (6) represents the relationship between torque of the double three-phase winding motor having the permanent magnet and the field winding, and currents flowing through the windings, and corresponds to a "predetermined constraint condition". An evaluation function Pw shown in Expression (7) represents copper loss occurring when currents flow through the windings of the motor 1. That is, minimizing the evaluation function Pw of Expression (7) means minimizing copper loss which is one of losses occurring in the motor 1. In Expression (6) and Expression (7), T is torque of the motor 1, Pn is the number of pole pairs, T1 is torque based on the first stator windings, and T2 is torque based on the second stator windings. Considering magnetic saturation and inter-axis interference of magnetic fluxes, terms representing these influences may be added to Expression (6). The evaluation function Pw may be a function representing iron loss or switching loss, or may be a function representing total loss including losses such as copper loss, iron loss, and switching loss. The evaluation function may be set for not only loss but also output torque, torque response, or the like. In a case where the evaluation function is set as output torque, it becomes possible to maximize or minimize output torque under a constraint condition. In a case where the evaluation function is set as torque response, it becomes possible to maximize or minimize torque response under a constraint condition.

On the basis of the above Expression (6) and Expression (7), a Lagrange function L (id1, iq1, id2, iq2, if, λ) is created to obtain Expression (8). Here, λ is a Lagrange coefficient.

[Mathematical 3]

$$L\left(i_{d_1}, i_{q_1}, i_{d_2}, i_{q_2}, i_f, \lambda\right)$$
$$= P_w$$
$$+ \lambda \left\{\left(M_{f_1} i_{q_1} + M_{f_2} i_{q_2}\right) i_f + \left(L_{d_1} - L_{q_1}\right) i_{d_1} i_{q_1}\right.$$
$$+ \left(L_{d_2} - L_{q_2}\right) i_{d_2} i_{q_2} + \left(M_d - M_q\right)\left(i_{d_2} i_{q_1} + i_{d_1} i_{q_2}\right)$$
$$\left. + K_{E_1} i_{q_1} + K_{E_2} i_{q_2} - \frac{T^*}{P_n}\right\} \quad \cdots \cdots (8)$$

Derivatives obtained by partial differentiation of the Lagrange function L shown by Expression (8) with respect to each variable are set to be zero, to obtain simultaneous equations. Then, by solving the simultaneous equations, it is possible to calculate id1, iq1, id2, iq2, if, λ so as to minimize the evaluation function of Expression (7) under the constraint condition of Expression (6). In order to calculate the current commands that minimize the evaluation function Pw under the torque command T*, the above simultaneous equations are to be solved with the values in Expression (8) replaced as T = T*, id1 = id1*, id2 = id2*, iq1 = iq1*, iq2 = iq2*, and if = if*. That is, simultaneous equations represented by the following Expressions (9) to (13) are to be solved.
[Mathematical 4]

$$\{(L_{d_1} - L_{q_1})i_{q_1}^* + (M_d - M_q)i_{q_2}^*\}i_{q_1}^*$$
$$= \{M_{f_1}i_f^* + (L_{d_1} - L_{q_1})i_{d_1}^* + (M_d - M_q)i_{d_2}^* + K_{E_1}\}i_{d_1}^* \quad \cdots \cdot (9)$$

[Mathematical 5]

$$\{(L_{d_2} - L_{q_2})i_{q_2}^* + (M_d - M_q)i_{q_1}^*\}i_{q_2}^*$$
$$= \{M_{f_2}i_f^* + (L_{d_2} - L_{q_2})i_{d_2}^* + (M_d - M_q)i_{d_1}^* + K_{E_2}\}i_{d_2}^* \quad \cdots \cdot (10)$$

[Mathematical 6]

$$\{(L_{d_2} - L_{q_2})i_{q_2}^* + (M_d - M_q)i_{q_1}^*\}R_1 i_{d_1}^*$$
$$= \{(L_{d_1} - L_{q_1})i_{q_1}^* + (M_d - M_q)i_{q_2}^*\}R_2 i_{d_2}^* \quad \cdots \cdot (11)$$

[Mathematical 7]

$$R_f i_f^* \{(L_{d_1} - L_{q_1})i_{q_1}^* + (M_d - M_q)i_{q_2}^*\}$$
$$= (M_{f_1}i_{q_1}^* + M_{f_2}i_{q_2}^*)R_1 i_{d_1}^* \quad \cdots \cdot (12)$$

[Mathematical 8]

$$\left(M_{f_1}i_{q_1}^* + M_{f_2}i_{q_2}^*\right)i_f^* + \left(L_{d_1} - L_{q_1}\right)i_{d_1}^* i_{q_1}^* + \left(L_{d_2} - L_{q_2}\right)i_{d_2}^* i_{q_2}^*$$

$$+ \left(M_d - M_q\right)\left(i_{d_2}^* i_{q_1}^* + i_{d_1}^* i_{q_2}^*\right) + K_{E_1}i_{q_1}^* + K_{E_2}i_{q_2}^* - \frac{T^*}{P_n}$$

$$= 0 \quad \cdots \cdot (13)$$

By solving the simultaneous equations represented by Expressions (9) to (13), it is possible to calculate the first stator winding current commands id1*, iq1*, the second stator winding current commands id2*, iq2*, and the field winding current command if* that minimize the evaluation function Pw under the condition that the current commands achieve the torque command T*.

In a case where some of the parameters for the first stator windings and the second stator windings are equal to each other, and thus they can be set as R1 = R2 = 2R, Ld1 = Ld2 = 2Ld, Mf1 = Mf2 = Mf, and KE1 = KE2 = KE, and Md and Mq can be set as two times the above defined value, the current commands are generated so that the first stator winding current commands id1*, iq1* and the second stator winding current commands id2*, iq2* become equal to each other. That is, the current commands are generated so as to satisfy id1*/2 = id2*/2 = id* and iq1*/2 = iq2*/2 = iq*. In this case, Expressions (9) to (13) are deformed to derive the following Expressions (14) to (16).
[Mathematical 9]

$$i_d^* = \frac{R_f i_f^*(L_d + M_d - L_q - M_q)}{RM_f} \quad \cdots \cdot (14)$$

[Mathematical 10]

$$i_q^* = \pm \sqrt{\frac{R_f i_f^* \{M_f i_f^* + (L_d + M_d - L_q - M_q)i_d^* + K_E\}}{RM_f}} \quad \cdots \cdot (15)$$

[Mathematical 11]

$$\{(M_f i_f^* + K_E) + (L_d + M_d - L_q - M_q)i_d^*\}i_q^* - \frac{T^*}{P_n} = 0 \quad \cdots \cdot (16)$$

In a case where some of the parameters for the first stator windings and the second stator windings are equal to each other as described above, the simultaneous equations represented by Expressions (14) to (16) are solved, whereby it is possible to calculate the current commands id* (= id1*/2 = id2*/2), iq* (= iq1*/2 = iq2*/2), and if* that minimize the evaluation function Pw under the condition of achieving the torque command T*.

On the other hand, in a case where there is a difference in the response speed to the current commands between the field winding, and the first stator winding and the second stator winding, Expressions (14) to (16) are not actually satisfied. Specifically, in a case where the response speed of the field winding current if to the field winding current command if* is slower than the response speeds of the first stator winding d-axis current id1 and the first stator winding q-axis current iq1, and the second stator winding d-axis current id2 and second stator winding q-axis current iq2, to the first stator winding current commands id1*, iq1* and the second stator winding current commands id2*, iq2*, if = if* is not satisfied in the transient state, so that Expressions (14) to (16) are not established. Therefore, if the simultaneous equations of Expressions (14) to (16) are solved without considering the influence of response delay of the field winding current if, an optimum solution is not obtained, and the current commands obtained as a result of the calculation do not minimize the evaluation function Pw. In addition, also the constraint condition of Expression (6) is not satisfied, so that follow-up property to the torque command T* is also lowered. As described above, in a case of not considering a difference in the response speed between the windings (response delay of the field winding), copper loss increases so that efficiency is reduced, and follow-up property to the torque command T* is lowered so that torque response is deteriorated.

The field current command generator 71 in embodiment 1 calculates the field winding current command if* that satisfies the following Expression (17) obtained by deforming Expressions (14) to (16).

[Mathematical 12]

$$\frac{R_f i_f^*}{RM_f}\left[\left\{M_f + \frac{R_f(L_d + M_d - L_q - M_q)^2}{RM_f}\right\}i_f^* + K_E\right]^3 = \frac{T^{*2}}{P_n^2} \quad \cdots \cdot (17)$$

Expression (17) which is a quartic equation of the field winding current command if* may be calculated through recursive numerical analysis such as a Newton's method or a torque feedback method, for example. The field current command generator 71 outputs the calculated field winding current command if* to the field winding current control unit 21 and the field current time constant filter 72.

The field current time constant filter 72 reproduces response delay of the field winding current if for the field winding current command if* in a simulated manner, thereby causing the field winding current command if* at a given time to approach the field winding current if. The field current time constant filter 72 uses one or more of filters G1, G2, G3, G4 shown in the following Expression (18).

[Mathematical 13]

$$G_1 = \frac{\frac{1}{T_{L_f}}}{s + \frac{1}{T_{L_f}}}, G_2 = \frac{\frac{1}{T_{C_f}}}{s + \frac{1}{T_{C_f}}}, G_3 = \frac{\frac{1}{T_{sensor}}}{s + \frac{1}{T_{sensor}}}, G_4 = \frac{\frac{1}{T_{CC}}}{s + \frac{1}{T_{CC}}} \quad \cdots \cdots (18)$$

In Expression (18), G1 reproduces response delay due to the impedance of the field winding in a simulated manner. TLf is a time constant of the field winding with respect to current, and depends on the impedance of the field winding. G2 reproduces response delay of current control response in a simulated manner. TCf is a time constant of the field winding current control unit 21, and depends on the impedance of the field winding. G3 reproduces response delay due to sensor delay in a simulated manner. Tsensor is a time constant of sensor delay, and depends on the characteristics of a used sensor such as the current detector 6. G4 reproduces response delay due to the calculation cycle in a simulated manner. Tcc is a time constant due to the calculation cycle, and depends on the characteristics of the processor 10. The field current time constant filter 72 applies one or more of the filters G1, G2, G3, G4 to the field winding current command if* outputted from the field current command generator 71, and outputs a field winding current command if** in which response delay of the field winding current if is reproduced in a simulated manner, to the stator current command generator 73. The field current time constant filter 72 may be formed by a filter, a LUT, a function, and a state estimator. The field winding current command if** may be the field winding current if received from the current detector 6.

The stator current command generator 73 calculates the first stator winding current commands id1*, iq1* and the second stator winding current commands id2*, iq2* by using the following Expression (19) and Expression (20) on the basis of the torque command T* outputted from the torque time constant filter 70, the field winding current command if** outputted from the field current time constant filter 72, and the motor parameters 63.

[Mathematical 14]

$$i_d^* = \frac{K_E + M_f i_f^{**}}{2(L_q + M_q - L_d - M_d)} - \sqrt{\frac{(K_E + M_f i_f^{**})^2}{4(L_q + M_q - L_d - M_d)^2} + i_q^{*2}} \quad \cdots (19)$$

[Mathematical 15]

$$\{(M_f i_f^{**} + K_E) + (L_d + M_d - L_q - M_q)i_d^*\}i_q^* - \frac{T^*}{P_n} = 0 \quad \cdots \cdots (20)$$

The stator current command generator 73 outputs the first stator winding current commands id1*, iq1* and the second stator winding current commands id2*, iq2* calculated using Expression (19) and Expression (20), to the first stator winding current control unit 22 and the second stator winding current control unit 23, respectively. The first stator winding current commands id1*, iq1* and the second stator winding current commands id2*, iq2* calculated by the stator current command generator 73 are calculated on the basis of the field winding current command if** in which response delay of the field winding current if is reproduced in a simulated manner, and therefore minimize the evaluation function Pw and satisfy the constraint condition of Expression (6). Thus, as compared to a case of not considering response delay of the field winding current if, follow-up property to the torque command T* is improved so that torque response in a transient state is improved, and copper loss is reduced so that efficiency is improved.

The above calculations for the current commands in the current command calculation unit 60 are summarized as follows. First, simultaneous equations obtained by the method of Lagrange multipliers are deformed to derive an equation of the field winding current command if*, and this equation is solved to calculate the field winding current command if*.

Next, response delay of the field winding current if is reproduced for the field winding current command if* in a simulated manner, thereby calculating the field winding current command if** in which the response delay is reproduced in a simulated manner.

Next, the first stator winding current commands id1*, iq1* and the second stator winding current commands id2*, iq2* are calculated using the field winding current command if** in which the response delay is reproduced in a simulated manner.

It is noted that the field winding current if is controlled using the field winding current command if*, i.e., the field winding current command if* for which the above response delay is not taken into consideration. The field winding current command if** in which the response delay is reproduced is used for calculation of the first stator winding current commands id1*, iq1* and the second stator winding current commands id2*, iq2*, but is not used for control of the field winding current if.

In a case where parameters for the first stator windings and the second stator windings are different from each other, i.e., in a case of R1 ≠ R2, Ld1 ≠ Ld2, Mf1 ≠ Mf2, and KE1 ≠ KE2, the first stator winding current commands id1*, iq1* and the second stator winding current commands id2*, iq2* are calculated so as to satisfy id1* ≠ id2* and iq1* ≠ iq2*.

In embodiment 1, for the plurality of windings, it has been assumed that response of the field winding current is slower than response of the first stator winding currents and the second stator winding currents, but other cases are also applicable. For example, the above can also be applied to a case where response of the first stator windings is slower. In this case, the first stator winding current commands id1*, iq1* are calculated first, and response delay is reproduced for these commands. Then, using the first stator winding current commands id1*, iq1* in which the response delay is reproduced, current commands for the other windings are calculated. In this case, the first stator windings correspond to the "second winding", and the other windings correspond to the "first winding".

The constraint condition in the method of Lagrange multipliers is not limited to that shown in Expression (6). Current limits shown by the following Expressions (21) to (23) and voltage limits shown by the following Expressions (24) to (26) may be added.

[Mathematical 16]

$$i_{dq1_{lim}} \geq \sqrt{i_{d1}^2 + i_{q1}^2} \quad \cdots \cdots (2 1)$$

[Mathematical 17]

$$i_{dq2_{lim}} \geq \sqrt{i_{d2}^2 + i_{q2}^2} \quad \cdots \cdots (2 2)$$

[Mathematical 18]

$$i_{f_{lim}} \geq i_f \quad \cdots \cdots (2 3)$$

[Mathematical 19]

$$k_1 V_{DC1} \geq \sqrt{v_{d1}^2 + v_{q1}^2} \quad \cdots \cdots (2 4)$$

[Mathematical 20]

$$k_2 V_{DC2} \geq \sqrt{v_{d2}^2 + v_{q2}^2} \quad \cdots \cdots (2 5)$$

[Mathematical 21]

$$k_3 V_{DC3} \geq |v_f| \quad \cdots \cdots (2 6)$$

In Expressions (24) to (26), k1, k2, k3 are voltage usage rates. In addition, vd1, vq1, vd2, vq2, vf are first stator winding d-axis voltage, first stator winding q-axis voltage, second stator winding d-axis voltage, second stator winding q-axis voltage, and field winding voltage, respectively. The relational expression among vd1, vq1, vd2, vq2, vf is represented by Expression (27). In a case of adding the constraint conditions shown by Expressions (21) to (23), it is possible to generate the current commands that minimize the evaluation function Pw at the time of limiting currents. In a case of adding the constraint conditions shown by Expressions (24) to (26), it is possible to generate the current commands that minimize the evaluation function Pw at the time of voltage saturation. The constraint condition may be changed to a constraint condition other than the above ones, or another such constraint condition may be added.

[Mathematical 22]

$$
\begin{bmatrix} v_{d1} \\ v_{q1} \\ v_{d2} \\ v_{q2} \\ v_f \end{bmatrix}
= \begin{bmatrix}
R_1 + sL_{d1} & 0 & 0 & 0 & 0 \\
0 & R_1 + sL_{q1} & 0 & 0 & 0 \\
0 & 0 & R_2 + sL_{d2} & 0 & 0 \\
0 & 0 & 0 & R_2 + sL_{q2} & 0 \\
0 & 0 & 0 & 0 & R_f + sL_f
\end{bmatrix}
\begin{bmatrix} i_{d1} \\ i_{q1} \\ i_{d2} \\ i_{q2} \\ i_f \end{bmatrix}
$$
$$
+ s \begin{bmatrix}
0 & 0 & M_d & 0 & M_{f1} \\
0 & 0 & 0 & M_q & 0 \\
M_d & 0 & 0 & 0 & M_{f2} \\
0 & M_q & 0 & 0 & 0 \\
M_{f1} & 0 & M_{f2} & 0 & 0
\end{bmatrix}
\begin{bmatrix} i_{d1} \\ i_{q1} \\ i_{d2} \\ i_{q2} \\ i_f \end{bmatrix}
$$
$$
+ \omega \begin{bmatrix}
0 & -L_{q1} & 0 & -M_q & 0 \\
L_{d1} & 0 & M_d & 0 & M_{f1} \\
0 & -M_q & 0 & -L_{q2} & 0 \\
M_d & 0 & L_{d2} & 0 & M_{f2} \\
0 & 0 & 0 & 0 & 0
\end{bmatrix}
\begin{bmatrix} i_{d1} \\ i_{q1} \\ i_{d2} \\ i_{q2} \\ i_f \end{bmatrix}
+ \begin{bmatrix} 0 \\ \omega K_{E1} \\ 0 \\ \omega K_{E2} \\ 0 \end{bmatrix} \qquad \cdots (27)
$$

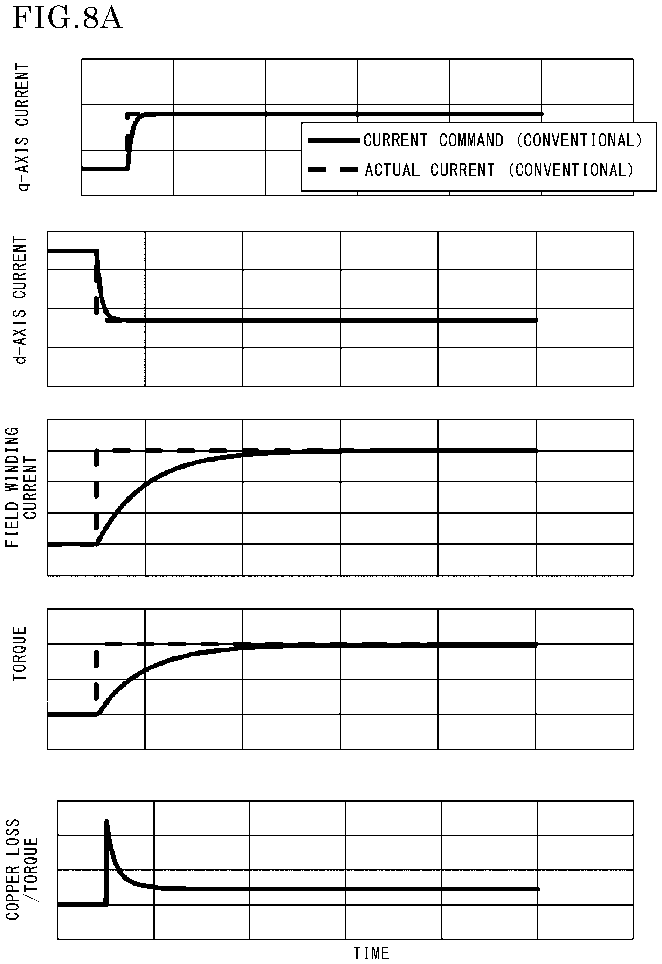

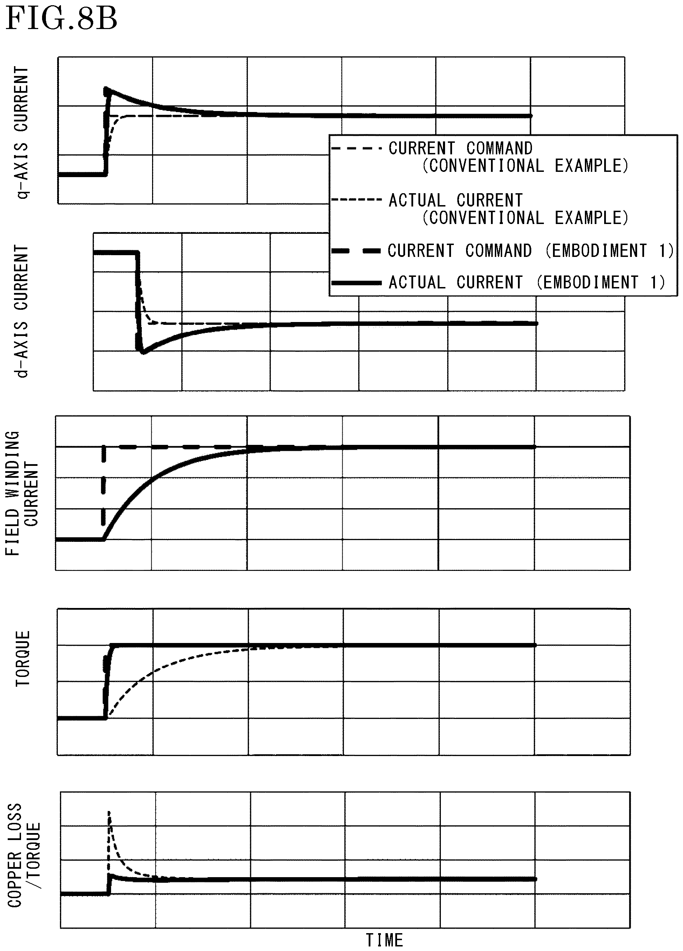

Effects obtained by applying embodiment 1 will be described with reference to FIG. 8A and FIG. 8B. FIG. 8A shows a control result in a conventional motor control device, and FIG. 8B shows a control result in the motor control device according to embodiment 1. FIG. 8A and FIG. 8B show, from the top, temporal changes in actual current and a current command of q-axis current in the first stator winding and the second stator winding, temporal changes in actual current and a current command of d-axis current, temporal changes in actual current and a current command of field current, temporal changes in torque and a torque command, and a value obtained by dividing copper loss by torque (copper loss/torque). In FIG. 8A, actual currents, actual torque, and copper loss/torque are indicated by solid lines, and current commands and a torque command therefor are indicated by broken lines. In FIG. 8B, actual currents and torque, and copper loss/torque, in embodiment 1 are indicated by solid lines, and current commands and a torque command therefor are indicated by broken lines. Also, actual currents and torque, and copper loss/torque, in the conventional example are indicated by dotted lines, and current commands and a torque command therefor are indicated by thin broken lines. In a control result of the conventional example shown in FIG. 8A, the q-axis current and the d-axis current quickly follow the current commands, but the field current and torque exhibit slower response to the current command and the torque command than the q-axis current and the d-axis current. In addition, it is found that copper loss/torque transiently becomes great. It is considered that the response delay of torque and the transient increase in copper loss occur because the actual field winding current and the field winding current command are different from each other (if ≠ if*).

On the other hand, in the control result of embodiment 1 shown in FIG. 8B, the field winding current exhibits response delay, but response delay of torque and transient increase in copper loss hardly occur. The reason is considered as follows. In control of the field current, there is a difference between the actual current value and the current command therefor, but meanwhile, in calculation of the first stator winding current commands id1*, iq1* and the second stator winding current commands id2*, iq2*, the field winding current command if** in which response delay is reproduced in a simulated manner is used, whereby the current commands are calculated so as to minimize the evaluation function Pw indicating copper loss, thus suppressing increase in copper loss, and also, the first stator winding current commands id1*, iq1* and the second stator winding current commands id2*, iq2* satisfy the constraint condition of Expression (6), whereby the current commands for achieving the torque command T* are more accurately generated.

The motor 1 in embodiment 1 is a double three-phase motor with a rotor having a permanent magnet. However, without limitation thereto, a motor with a rotor not having a permanent magnet may be used. Without limitation to a double three-phase winding motor, a motor having stator windings for three or more phases may be used, or a motor having one pair of stator windings or three or more pairs of stator windings may be used.

According to embodiment 1, reduction in efficiency can be prevented even when the motor characteristics are changed. More specifically, the parameter acquisition unit is provided for regularly acquiring motor state data indicating the state of the motor which is a control target, and acquiring the motor parameters corresponding to the motor state data, thereby updating the motor parameters, and calculation of the current commands for the windings is performed on the basis of the motor parameters acquired by the motor parameter acquisition unit. Thus, even when the motor characteristics are changed, calculation of the current commands is performed on the basis of the changed motor parameters, whereby motor control corresponding to change in the motor characteristics is performed. In addition, the field winding current command is calculated prior to the first stator winding current command and the second stator winding current command, and response delay of the field winding current is reproduced for the field winding current command in a simulated manner. Then, using the field winding current command in which the response delay is reproduced, the first stator winding current commands and the second stator winding current commands are calculated. Thus, the field winding current command used in calculation of the first stator winding current commands and the second stator winding current commands becomes almost equal to the actual field winding current, whereby the current commands that minimize the evaluation function indicating copper loss can be accurately calculated. In this way, while adapting to change in the motor characteristics, calculation of the current commands is performed considering a difference in response speed between the windings, whereby it is possible to prevent reduction in efficiency even when the motor characteristics are changed. In addition, for the same reason, the constraint condition for reflecting the torque command can be accurately satisfied, whereby it is also possible to prevent deterioration in torque response.

Calculation of the current commands for the windings is merely performed such that the field winding current command is calculated first, and then, using the field winding current command in which response delay is reproduced, the first stator winding current commands and the second stator winding current commands are calculated. Therefore, it is not necessary to perform calculation for current correction for compensating torque reduction due to response delay of the field winding current. Thus, it is possible to reduce calculation cost and a necessary memory in motor control.

The parameter acquisition unit regularly acquires the motor parameters and updates the motor parameters to be used for calculation of the current commands. Therefore, it is not necessary to create a map in advance, so that works to be performed in advance can be decreased and a memory for storing a map can be omitted.

The torque time constant filter is provided for eliminating change in the torque command beyond a certain level. Thus, the change amount and the change rate of torque of the motor are equal to or smaller than an allowable level, whereby vibration of the motor and noise due to the motor can be suppressed.

In a case of using estimated values as the motor state data for determining the motor parameters, the influence of harmonic disturbance which might be included in actual measured values, and the like, can be eliminated. Thus, convergence in calculation of the current commands is improved.

Embodiment 2

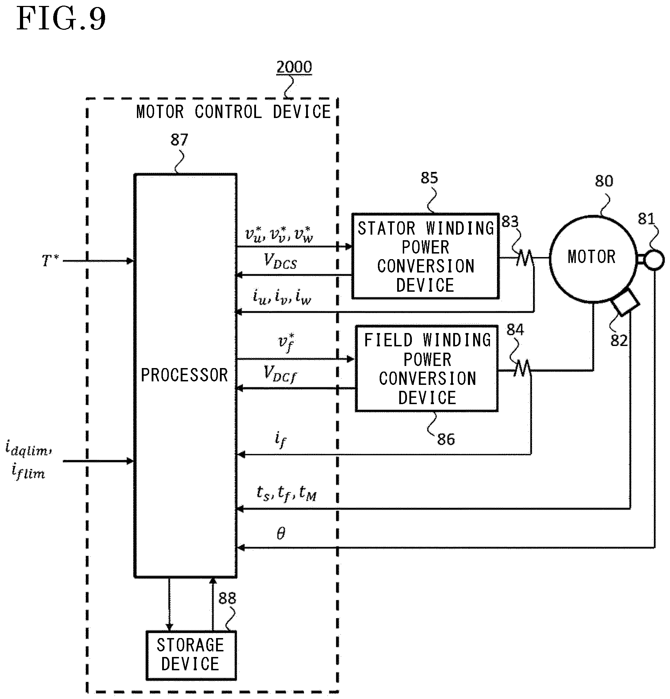

Next, embodiment 2 will be described with reference to FIG. 9. Parts that are the same as or correspond to those in FIG. 1 to FIG. 8B are denoted by the same reference characters, and the description thereof is omitted. FIG. 9 is a diagram showing the hardware configuration of a motor control device according to embodiment 2, and shows an entire system including a motor which is a control target. A motor control device 2000 is for performing drive control for a motor 80, and is connected to windings of the motor 80 via a stator winding power conversion device 85 and a field winding power conversion device 86 each described later. In addition, the motor control device 2000 is connected to a position detector 81 and a temperature detector 82 provided to the motor 80. Further, the motor control device 2000 is connected to current detectors 83 and 84 which are respectively connected in series between the motor 80, and the stator winding power conversion device 85 and the field winding power conversion device 86.

The motor 80 is a three-phase winding motor including a rotor having a permanent magnet and a field winding wound around the permanent magnet, and a stator having three-phase stator windings. The permanent magnet of the rotor may be omitted. Hereinafter, the three-phase windings of the stator of the motor 80 are referred to as "stator windings". The stator windings correspond to the "first winding", and the field winding corresponds to the "second winding". The above-described parts of the motor are not shown in the drawings.

The position detector 81 is provided to a rotary shaft of the motor 80 and detects an angle θ of the rotor. The position detector 81 transmits the detected angle θ to the motor control device 2000. Instead of the position detector 81, a position estimator for estimating the angle θ of the rotor may be provided and an estimated value of the angle θ may be transmitted to the motor control device 2000.

The temperature detector 82 detects at least one of a temperature ts of the stator windings, a temperature tf of the field winding, and a temperature tM of the permanent magnet. The temperature detector 82 transmits the detected temperatures ts, tf, tM to the motor control device 2000. Instead of the temperature detector 82, a temperature estimator may be provided and estimated values of ts, tf, tM may be transmitted to the motor control device 2000.

The current detector 83 detects three-phase currents flowing through the stator windings, and transmits the respective current values as stator winding currents iu, iv, iw to the motor control device 2000. The current detector 84 detects current flowing through the field winding, and transmits the current value thereof as field winding current if to the motor control device 2000. Instead of the current detectors 83, 84, a current estimator may be provided and estimated values of iu, iv, iw, if may be transmitted to the motor control device 2000.

The stator winding power conversion device 85 receives three-phase voltage commands vu*, vv*, vw* for the stator windings from the motor control device 2000, and generates voltages corresponding to the respective voltage commands. In addition, the stator winding power conversion device 85 detects DC link voltage used in power conversion for the stator windings, and transmits the voltage value thereof as DC link voltage VDCS to the motor control device 2000.

The field winding power conversion device 86 receives a field winding voltage command vf* which is a voltage command for the field winding, from the motor control device 2000, and generates voltage corresponding to the field winding voltage command vf*. In addition, the field winding power conversion device 86 detects DC link voltage used in power conversion for the field winding, and transmits the voltage value thereof as DC link voltage VDCf to the motor control device 2000.

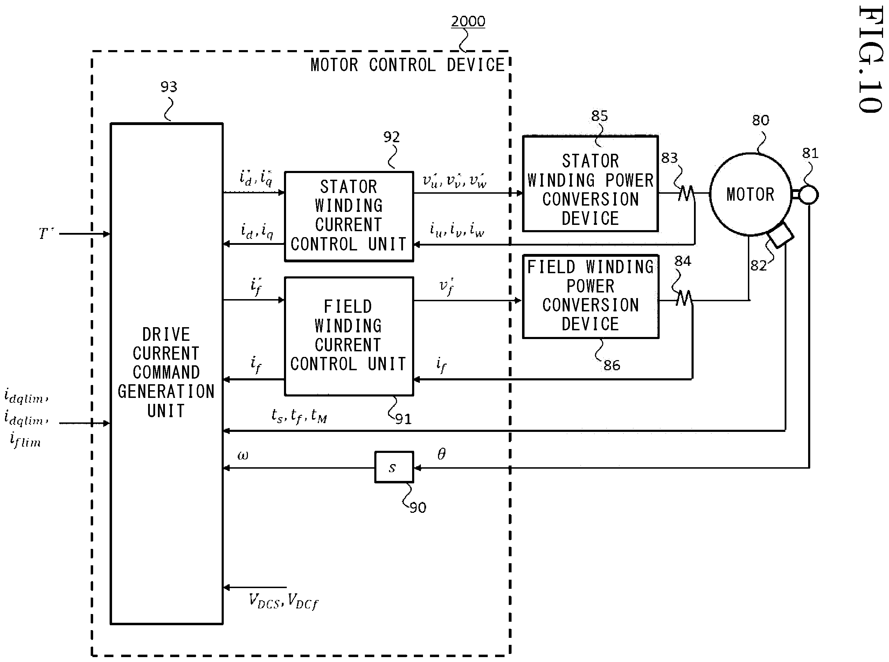

A processor 87 is, for example, a CPU, and executes a program read from a storage device 88, to implement various function units shown in FIG. 10. When the processor 87 reads the program from the storage device 88, the processor 87 reads the program stored in an auxiliary storage device via a volatile storage device. Through execution of the program by the processor 87, current commands, data, and the like are generated. The processor 87 may output the data to the volatile storage device of the storage device 88, or may store the data into the auxiliary storage device via the volatile storage device.

The processor 87 transmits the generated current commands to the stator winding power conversion device 85 and the field winding power conversion device 86 via an interface (not shown) with the outside. The processor 87 receives the angle θ from the position detector 81. The processor 87 receives the temperatures ts, tf, tM from the temperature detector 82. The processor 87 receives the stator winding currents iu, iv, iw from the current detector 83, and the field winding current if from the current detector 84. The processor 87 receives the DC link voltages VDCS, VDCf from the stator winding power conversion device 85 and the field winding power conversion device 86, respectively. The processor 87 receives a torque command T*, a current limit idqlim which is a current upper limit value for the stator windings, and a current limit iflim which is a current upper limit value for the field winding, from a high-order control device or through a user's input.

FIG. 10 is a block diagram showing the motor control device according to embodiment 2. The motor control device 2000 includes: a drive current command generation unit 93 which generates current commands for controlling currents flowing through the respective windings of the motor 80, to drive the motor 80; a stator winding current control unit 92 which converts stator winding current commands id*, iq* for controlling currents flowing through the stator windings, to stator winding voltage commands vu*, vv*, vw* which are three-phase voltage commands; and a field winding current control unit 91 which converts a field winding current command if* for controlling current flowing through the field winding, to a field winding voltage command vf*. Further, the motor control device 2000 includes a differentiator 90 which receives the angle θ of the rotor of the motor 80 from the position detector 81 of the motor 80 and calculates an angular velocity ω of the rotor. The stator winding current commands id*, iq* correspond to the "first current command", and the field winding current command if* corresponds to the "second current command".

The drive current command generation unit 93, the stator winding current control unit 92, the field winding current control unit 91, and the differentiator 90 correspond to the drive current command generation unit 24, the first stator winding current control unit 22 and the second stator winding current control unit 23, the field winding current control unit 21, and the differentiator 20 in embodiment 1, and the "first stator windings" and the "second stator windings" in embodiment 1 are replaced with the "stator windings" in embodiment 2, and except this, the configuration is the same. Therefore, the detailed description about the configuration is omitted.

In embodiment 2, the double three-phase motor in embodiment 1 is replaced with the three-phase motor. Therefore, by replacing the current commands, currents, and the voltage commands in embodiment 1, the same operation as in embodiment 1 can be performed. Specifically, the values are replaced as follows: id*/2 = id1* = id2*, iq*/2 = iq1* = iq2*, vu*/2 = vu1* = vu2*, vv*/2 = vv1* = vv2*, vw*/2 = vw1* = vw2*, iu/2 = iu1 = iu2, iv/2 = iv1 = iv2, iw/2 = iw1 = iw2.

Other matters are the same as in embodiment 1 and therefore the description thereof is omitted.

According to embodiment 2, the same effects as in embodiment 1 can be obtained.

DESCRIPTION OF THE REFERENCE CHARACTERS

1, 80 motor
4, 5, 6, 83, 84 current detector
24, 93 drive current command generation unit
60 current command calculation unit
61 parameter acquisition unit
62 motor state data
63 motor parameter
71 field current command generator
72 field current time constant filter
73 stator current command generator
1000, 2000 motor control device
id1*, iq1* first stator winding current command
id2*, iq2* second stator winding current command
id*, iq* stator winding current command
if* field winding current command
iu1, iv1, iw1 first stator winding current
iu2, iv2, iw2 second stator winding current
iu, iv, iw stator winding current
if field winding current
T* torque command

**Claims**

1.  A motor control device (1000,2000) for controlling a motor (1,80) having a first winding and a second winding whose response to a current command is slower than that of the first winding, the motor control device (1000,2000) comprising:

    a current command calculation unit (60) adapted to calculate current commands (id1 * , iq1 * , id2 * , iq2 * , i f*) for the first winding and the second winding on the basis of a torque command (T*) for the motor (1,80) and the motor parameter (63), wherein
    the current command calculation unit (60) includes

    a first calculation unit (73) adapted to calculate a first current command (id1 * , iq1 * , id2 * , iq2 *) for the first winding,
    a second calculation unit (71) adapted to calculate a second current command (if*) for the second winding,
    **characterized by**
    a parameter acquisition unit (61) adapted to regularly acquire motor state data (62) indicating a state of the motor (1, 80), and acquire a motor parameter (63) corresponding to the motor state data (62),
    a response delay reproduction unit (72) adapted to reproduce, in the second current command (if*), response delay of the second winding relative to the second current command (if*), and in that

    the first calculation unit (73) is adapted to calculate the first current command (id1*,iq1*,id2*,iq2*), using the second current command (if*) in which the response delay is reproduced.

2.  The motor control device (1000,2000) according to claim 1, wherein
    the response delay reproduction unit (72) is adapted to reproduce one or more of response delay due to an impedance of the second winding, response delay due to current control response of the second winding, response delay due to sensor delay of a sensor for detecting current flowing through the second winding, and response delay due to a calculation cycle of the current command calculation unit.

3. The motor control device (1000,2000) according to claim 1, wherein
the first current command (id1*,iq1*,id2*,iq2*) is calculated using a current value of current (if) flowing through the second winding, instead of the second current command (if*) in which the response delay is reproduced by the response delay reproduction unit (72).

4. The motor control device (1000,2000) according to any one of claims 1 to 3, wherein
the motor state data (62) includes a temperature (ts1,ts2,tf,tM) of the motor (1,80).

5. The motor control device (1000,2000) according to any one of claims 1 to 4, wherein
the motor state data (62) includes one or both of a current value of current (id1,iq1,id2,iq2) flowing through the first winding and a current value of current (if) flowing through the second winding.

6. The motor control device (1000,2000) according to any one of claims 1 to 5, wherein
an estimated value based on a predetermined model is used as the motor state data (62).

7. The motor control device (1000,2000) according to any one of claims 1 to 6, wherein
the first calculation unit (73) and the second calculation unit (71) are adapted to calculate the first current command (id1 *, iq1 *, id2*, iq2*) and the second current command (if*) that minimize or maximize a predetermined evaluation function under a predetermined constraint condition, the constraint condition representing a relationship between torque of the motor and currents flowing through the windings.

8. The motor control device (1000,2000) according to claim 7, wherein
the evaluation function represents at least one of loss occurring in the motor (1,80), output torque of the motor (1,80), and torque response of the motor (1,80).

9. The motor control device (1000,2000) according to any one of claims 1 to 8, wherein

the motor (1,80) is a motor including a stator having three-phase stator windings and a rotor having a field winding, and
the first winding is the three-phase stator windings, and the second winding is the field winding.

10. The motor control device (1000,2000) according to claim 9, wherein
the three-phase stator windings are each composed of a plurality of windings.


**Patentansprüche**

1. Motorsteuervorrichtung (1000, 2000) zur Steuerung eines Motors (1,80) mit einer ersten Wicklung und einer zweiten Wicklung, deren Reaktion auf einen Strombefehl langsamer ist als die der ersten Wicklung, wobei die Motorsteuervorrichtung (1000, 2000) umfasst:

eine Strombefehlsberechnungseinheit (60), die dazu angepasst ist, Strombefehle (id1*, iq1*, id2*, iq2*, if*) für die erste Wicklung und die zweite Wicklung auf der Grundlage eines Drehmomentbefehls (T*) für den Motor (1,80) und des Motorparameters (63) zu berechnen, wobei
die Strombefehlsberechnungseinheit (60) enthält

eine erste Berechnungseinheit (73), die dazu angepasst ist, einen ersten Strombefehl (id1*,iq1*,id2*,iq2*) für die erste Wicklung zu berechnen,
eine zweite Berechnungseinheit (71), die dazu angepasst ist, einen zweiten Strombefehl (if*) für die zweite Wicklung zu berechnen, **gekennzeichnet durch**

eine Parametererfassungseinheit (61), die dazu angepasst ist, regelmäßig Motorzustandsdaten (62) zu erfassen, die einen Zustand des Motors (1, 80) anzeigen, und einen Motorparameter (63) zu erfassen, der den Motorzustandsdaten (62) entspricht,
eine Reaktionsverzögerungsreproduktionseinheit (72), die dazu angepasst ist, in dem zweiten Strombefehl (if*) eine Reaktionsverzögerung der zweiten Wicklung relativ zum zweiten Strombefehl (if*) zu reproduzieren und wobei

die erste Berechnungseinheit (73) dazu angepasst ist, den ersten Strombefehl (id1*, iq1*, id2*, iq2*) unter Verwendung des zweiten Strombefehls (if*) zu berechnen, in dem die Reaktionsverzögerung reproduziert wird.

2.  Motorsteuervorrichtung (1000, 2000) nach Anspruch 1, wobei
    die Reaktionsverzögerungsreproduktionseinheit (72) dazu angepasst ist, eine oder mehrere von Reaktionsverzögerung aufgrund einer Impedanz der zweiten Wicklung, von Reaktionsverzögerung aufgrund von Stromsteuerreaktion der zweiten Wicklung, von Reaktionsverzögerung aufgrund von Sensorverzögerung eines Sensors zum Erfassen von Strom, der durch die zweite Wicklung fließt, und von Reaktionsverzögerung aufgrund einer Berechnungszyklus der Strombefehlsberechnungseinheit zu reproduzieren.

3.  Motorsteuervorrichtung (1000, 2000) nach Anspruch 1, wobei
    der erste Strombefehl (id1*, iq1*, id2*, iq2*) unter Verwendung eines Stromwerts des Stroms (if) berechnet wird, der durch die zweite Wicklung fließt, anstelle des zweiten Strombefehls (if*), bei dem die Reaktionsverzögerung durch die Reaktionsverzögerungsreproduktionseinheit (72) reproduziert wird.

4.  Motorsteuervorrichtung (1000, 2000) nach einem der Ansprüche 1 bis 3, wobei
    die Motorzustandsdaten (62) eine Temperatur (ts1, ts2, tf, tM) des Motors (1,80) enthalten.

5.  Motorsteuervorrichtung (1000, 2000) nach einem der Ansprüche 1 bis 4, wobei
    die Motorzustandsdaten (62) einen oder beide eines Stromwerts des Stroms (id1, iq1, id2, iq2), der durch die erste Wicklung fließt, und eines Stromwerts des Stroms (if), der durch die zweite Wicklung fließt.

6.  Motorsteuervorrichtung (1000, 2000) nach einem der Ansprüche 1 bis 5, wobei
    ein Schätzwert basierend auf einem vorgegebenen Modell als die Motorzustandsdaten (62) verwendet wird.

7.  Motorsteuervorrichtung (1000, 2000) nach einem der Ansprüche 1 bis 6, wobei
    die erste Berechnungseinheit (73) und die zweite Berechnungseinheit (71) dazu angepasst sind, den ersten Strombefehl (id1*, iq1*, id2*, iq2*) und den zweiten Strombefehl (if*) zu berechnen, die eine vorgegebene Auswertungsfunktion unter einer vorgegebenen Randbedingung minimieren oder maximieren, wobei die Randbedingung eine Beziehung zwischen Drehmoment des Motors und Ströme, die durch die Wicklungen fließen.

8.  Motorsteuervorrichtung (1000, 2000) nach Anspruch 7, wobei
    die Auswertungsfunktion mindestens einen in dem Motor (1,80) auftretenden Verlust, ein Ausgangsdrehmoment des Motors (1,80) und eine Drehmomentreaktion des Motors (1,80) darstellt.

9.  Motorsteuervorrichtung (1000, 2000) nach einem der Ansprüche 1 bis 8, wobei

    der Motor (1,80) ein Motor ist, der einen Stator mit Dreiphasiger-Stator-Wicklungen und einen Rotor mit einer Feldwicklung enthält, und
    die erste Wicklung sind die Dreiphasiger-Stator-Wicklungen und die zweite Wicklung ist die Feldwicklung.

10. Motorsteuervorrichtung (1000, 2000) nach Anspruch 9, wobei
    die Dreiphasiger-Stator-Wicklungen jeweils aus einer Vielzahl von Wicklungen bestehen.

**Revendications**

1.  Dispositif (1000, 2000) de commande de moteur pour commander un moteur (1,80) présentant un premier enroulement et un deuxième enroulement dont la réponse à une instruction de courant est plus lente que celle du premier enroulement, le dispositif (1000, 2000) de commande de moteur comprenant :

    une unité (60) de calcul d'instruction de courant adaptée pour calculer des instructions (id1*, iq1*, id2*, iq2*, if*) de courant pour le premier enroulement et le deuxième enroulement sur la base d'une instruction (T*) de couple pour le moteur (1, 80) et le paramètre (63) de moteur, dans lequel
    l'unité (60) de calcul d'instruction de courant inclut

    une première unité (73) de calcul adaptée pour calculer une première instruction (id1*, iq1*, id2*, iq2*) de courant pour le premier enroulement,
une deuxième unité (71) de calcul adaptée pour calculer une deuxième instruction (if*) de courant pour le deuxième enroulement, **caractérisé par**
une unité (61) d'acquisition de paramètre adaptée pour acquérir régulièrement des données (62) d'état de moteur indiquant un état du moteur (1, 80), et acquérir un paramètre (63) de moteur correspondant aux données (62) d'état de moteur,
une unité (72) de reproduction de retard de réponse adaptée pour reproduire, dans la deuxième instruction (if*) de courant, un retard de réponse du deuxième roulement par rapport à la deuxième instruction (if*) de courant, et en ce que
la première unité (73) de calcul est adaptée pour calculer la première instruction (id1*, iq1*, id2*, iq2*) de courant, à l'aide de la deuxième instruction (if*) de courant dans laquelle le retard de réponse est reproduit.

2. Dispositif (1000, 2000) de commande de moteur selon la revendication 1, dans lequel
l'unité (72) de reproduction de retard de réponse est adaptée pour reproduire un ou plusieurs retards de réponse dus à une impédance du deuxième enroulement, un retard de réponse dû à une réponse de commande de courant du deuxième enroulement, un retard de réponse dû à un retard de capteur d'un capteur pour détecter du courant circulant à travers le deuxième enroulement, et un retard de réponse dû à un cycle de calcul de l'unité de calcul d'instruction de courant.

3. Dispositif (1000, 2000) de commande de moteur selon la revendication 1, dans lequel
la première instruction (id1*, iq1*, id2*, iq2*) de courant est calculée en utilisant une valeur actuelle de courant (if) circulant à travers le deuxième enroulement, au lieu de la deuxième instruction (if*) de courant dans laquelle le retard de réponse est reproduit par l'unité (72) de reproduction de retard de réponse.

4. Dispositif (1000, 2000) de commande de moteur selon l'une quelconque des revendications 1 à 3, dans lequel
les données (62) d'état de moteur incluent une température (ts1, ts2, tf, tM) du moteur (1, 80).

5. Dispositif (1000, 2000) de commande de moteur selon l'une quelconque des revendications 1 à 4, dans lequel
les données (62) d'état de moteur incluent l'un ou les deux d'une valeur actuelle de courant (id1, iq1, id2, iq2) circulant à travers le premier enroulement et une valeur actuelle de courant (if) circulant à travers le deuxième enroulement.

6. Dispositif (1000, 2000) de commande de moteur selon l'une quelconque des revendications 1 à 5, dans lequel
une valeur estimée sur la base d'un modèle prédéterminé est utilisée comme données (62) d'état de moteur.

7. Dispositif (1000, 2000) de commande de moteur selon l'une quelconque des revendications 1 à 6, dans lequel
la première unité (73) de calcul et la deuxième unité (71) de calcul sont adaptées pour calculer la première instruction (id1*, iq1*, id2*, iq2*) de courant et la deuxième instruction (if*) de courant qui minimisent ou maximisent une fonction d'évaluation prédéterminée sous une condition de contrainte prédéterminée, la condition de contrainte représentant une relation entre un couple du moteur et des courants circulant à travers les enroulements.

8. Dispositif (1000, 2000) de commande de moteur selon la revendication 7, dans lequel
la fonction d'évaluation représente au moins l'un parmi une perte survenue dans le moteur (1, 80), un couple de sortie du moteur (1, 80) et une réponse de couple du moteur (1, 80).

9. Dispositif (1000, 2000) de commande de moteur selon l'une quelconque des revendications 1 à 8, dans lequel

le moteur (1, 80) est un moteur incluant un stator présentant des enroulements de stator triphasés et un rotor présentant un enroulement de champ, et
le premier enroulement est les enroulements de stator triphasés et le deuxième enroulement est l'enroulement de champ.

10. Dispositif (1000, 2000) de commande de moteur selon la revendication 9, dans lequel
les enroulements de stator triphasés sont chacun composés d'une pluralité d'enroulements.

# FIG. 1

FIG.2

EP 3 961 909 B1

FIG.3

FIG.4

FIG.5

# FIG.6

# FIG.7

# FIG.8A

q-AXIS CURRENT

CURRENT COMMAND (CONVENTIONAL)
ACTUAL CURRENT (CONVENTIONAL)

d-AXIS CURRENT

FIELD WINDING CURRENT

TORQUE

COPPER LOSS /TORQUE

TIME

# FIG.8B

LEGEND:
- ----- CURRENT COMMAND (CONVENTIONAL EXAMPLE)
- ------ ACTUAL CURRENT (CONVENTIONAL EXAMPLE)
- — — CURRENT COMMAND (EMBODIMENT 1)
- —— ACTUAL CURRENT (EMBODIMENT 1)

Vertical axes (top to bottom): q-AXIS CURRENT, d-AXIS CURRENT, FIELD WINDING CURRENT, TORQUE, COPPER LOSS /TORQUE

Horizontal axis: TIME

# FIG.9

# FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6115392 B
- KR 101664680 B
- US 2017294857 A1
- US 2017170766 A1